# DEMANDE DE BREVET EUROPEEN

(11) **EP 4 011 676 A1**
(43) Date de publication de la demande: **15.06.2022**
(21) Numéro de dépôt: 21212600.7
(22) Date de dépôt: 06.12.2021
(51) Int. Cl.: B60L 3/00, B60L 58/26, H01M 10/0525, H01M 10/48, H01M 10/613, H01M 10/625, H01M 10/63, H01M 10/643, H01M 10/6567

(54) **MODULE DE BATTERIE À PLURALITÉ D'ACCUMULATEURS ÉLECTROCHIMIQUE, COMPRENANT UN DISPOSITIF NÉBULISEUR POUR PROJETER DES MICROGOUTTELETTES EN CAS D'EMBALLEMENT THERMIQUE D'AU MOINS UN DES ACCUMULATEURS**

(30) Priorité: 08.12.2020 FR 2012861
(71) Demandeur: Commissariat à l'Energie Atomique et aux Energies Alternatives, 75015 Paris (FR)
(72) Inventeur: VINCENT, Rémi, 38054 Grenoble Cedex 09 (FR); LAMBERT, Hadrien, 38054 Grenoble Cedex 09 (FR)
(74) Mandataire: Nony

(57) **Abrégé**

L'invention concerne consiste essentiellement à intégrer au sein d'un module (M) de batterie un nébuliseur (10) configuré pour atomiser un liquide, de préférence de l'eau, contenu dans un réservoir au-delà d'une température seuil caractéristique d'un emballement thermique, les microgouttelettes ainsi créées étant projetées au sein du module pour venir absorber l'énergie crée par l'emballement thermique.

## Description

### Domaine technique

La présente invention concerne le domaine des accumulateurs électrochimiques, et plus particulièrement des accumulateurs métal-ion.

L'invention vise principalement à optimiser le refroidissement des accumulateurs d'un module de batterie tel que l'énergie d'un emballement thermique d'un accumulateur donné au sein du module ne puisse se propager aux autres accumulateurs du module.

Bien que décrite en référence à un accumulateur Lithium-ion, l'invention s'applique à tout accumulateur électrochimique métal-ion, c'est-à-dire également les accumulateurs sodium-ion, Magnésium-ion, Aluminium-ion...ou de manière plus générale à tout accumulateur électrochimique.

Un module de batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

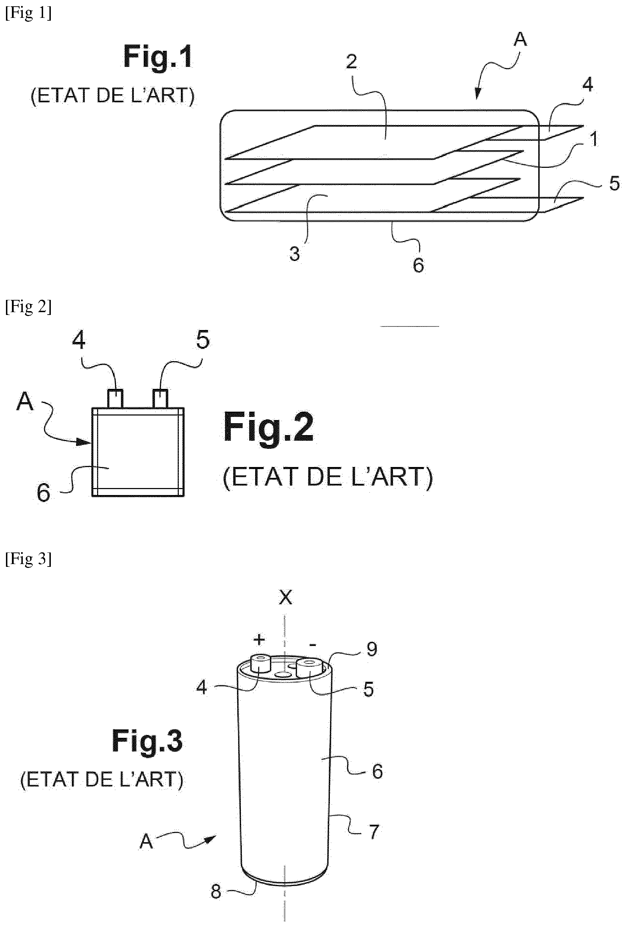

Telle qu'illustrée schématiquement en figures 1 et 2, une batterie ou accumulateur lithium-ion comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à l' anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles comporte une anode, une cathode et un électrolyte. Plusieurs types de géométrie d'architecture conventionnelle sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄, LiCoO₂, LiNi_{0.33}Mn_{0.33}Co_{0.33}O₂. L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide utilisé est constitué d'un boitier métallique, typiquement en acier inoxydable (inox 316L ou inox 304) ou en aluminium (Al 1050 ou Al 3003), ou encore en titane.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boitiers ont également déjà été réalisées par bobinage autour d'un mandrin prismatique.

La demande de brevet FR3004292 décrit l'utilisation de l'intérieur du mandrin en tant que lame d'air pour refroidir à cœur une cellule enroulée d'un accumulateur métal-ion.

Un des types de boitier rigide de forme cylindrique, usuellement fabriqué pour un accumulateur Li-ion de forte capacité, est illustré en figure 3.

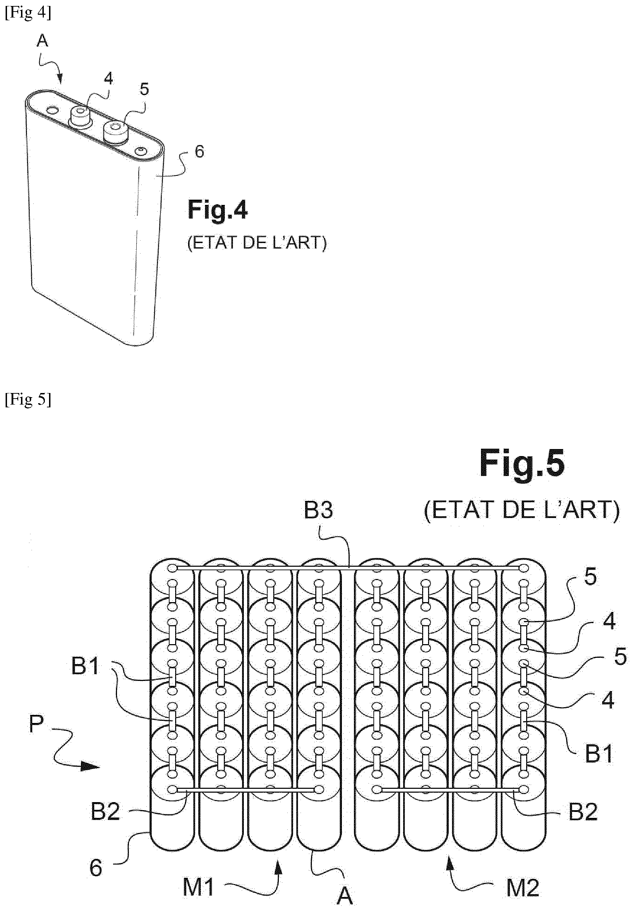

Un boitier rigide de forme prismatique est également montré en figure 4.

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne négative 5 est soudée sur le couvercle 9 tandis que l'autre borne de sortie, par exemple la borne positive 4, passe à travers le couvercle 9 avec interposition d'un joint non représenté qui isole électriquement la borne positive 4 du couvercle.

Le type de boitier rigide largement fabriqué consiste également en un godet embouti et un couvercle, soudés entre eux sur leur périphérie. En revanche, les collecteurs de courant comprennent une traversée avec une partie faisant saillie sur le dessus du boitier et qui forme une borne aussi appelée pôle apparent de la batterie.

Un pack batterie P est constitué d'un nombre variable d'accumulateurs pouvant atteindre plusieurs milliers qui sont reliés électriquement en série ou en parallèle entre eux et généralement par des barres de connexion, appelées usuellement busbars.

Un exemple de pack-batterie P est montré en figure 5. Ce pack est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égal à six accumulateurs Li-ion.

Comme représenté, la connexion mécanique et électrique entre deux accumulateurs Li-ion d'une même rangée est réalisée par vissage de busbars B1, avantageusement en cuivre, reliant chacune une borne positive 4 à une borne négative 5. La connexion entre deux rangées d'accumulateurs en parallèle au sein d'un même module M1 ou M2 est assurée par un busbar B2, également avantageusement en cuivre. La connexion entre les deux modules M1, M2 est assurée par un busbar B3, également avantageusement en cuivre.

Dans le développement et la fabrication des batteries lithium-ion, pour chaque profil/nouvelle demande, quel que soit les acteurs du marché, cela nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie. La sécurité est d'ailleurs un critère de plus en plus important surtout lorsque les systèmes de batterie ont pour finalité l'utilisation par le grand public, dans des domaines comme l'aviation ou les transports par véhicule terrestre.

La nécessiter de pouvoir améliorer, voir garantir, la sécurité des accumulateurs et modules de batterie devient donc un enjeu primordial.

Différents dispositifs passifs ou actifs ayant une fonction de sécurité peuvent être intégrés au niveau d'une cellule (accumulateur), et/ou d'un module et/ou du pack-batterie pour prévenir les problèmes, lorsque la batterie se retrouve dans des conditions dites de fonctionnement abusif.

Un système électrochimique lithium, que ce soit à l'échelle de la cellule (accumulateur), du module ou du pack, produit des réactions exothermiques quel que soit le profil de cyclage donné. Ainsi, à l'échelle d'un accumulateur unitaire, en fonction des chimies considérées, le fonctionnement optimal des accumulateurs lithium-ion est limité dans une certaine gamme de température.

Un accumulateur électrochimique doit fonctionner dans une plage de température définie, typiquement généralement inférieure à 70°C à sa surface extérieure de boitier, sous peine de dégrader ses performances, voire même de le dégrader physiquement jusqu'à destruction. On peut citer pour exemple les accumulateurs lithium de chimie fer-phosphate qui ont une plage de fonctionnement comprise généralement entre -20 °C et +60 °C. Au-delà de 60 °C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques. Lorsque l'accumulateur n'est plus capable d'évacuer suffisamment de chaleur, la température de la cellule augmente jusqu'à destruction, ce phénomène étant désigné usuellement sous l'appellation d'emballement thermique (en anglais *«Thermal Runaway»).* Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu.

La mise à disposition au grand public des systèmes batterie, en forte augmentation, va générer des utilisations incorrectes des systèmes, qui vont se traduire par des contraintes mécaniques, de mauvaises gestions électrique ou thermique, etc...Ces utilisations incorrectes vont probablement engendrer à leur tour des emballements thermiques d'un ou plusieurs accumulateurs au sein d'un module ou d'un pack-batterie.

Différentes solutions ont été proposées pour limiter ou éviter la propagation d'un emballement thermique au sein d'un pack-batterie.

On peut citer par exemple le brevet EP2181481B1 qui décrit une méthode de limitation de la propagation d'un emballement thermique dans un bloc batterie à multiples accumulateurs. FR3045793B1 décrit un pack batterie refroidi par un matériau à changement de phase dans une chambre hermétiquement fermée à pression constante, le matériau étant capable de passer de la phase liquide à la phase vapeur.

La demande de brevet DE102013017396A1 décrit un module de batterie dans lequel un liquide caloporteur en ébullition est directement en contact avec les cellules du module, afin de contrôler la température et de la maintenir dans une plage de température prédéterminée. Les différentes solutions selon l'art antérieur ne permettent pas de façon simple de mitiger réellement un emballement thermique d'un accumulateur au sein d'un pack-batterie, c'est-à-dire soit de calmer le début d'un emballement par un refroidissement augmenté, soit de permettre d'atténuer la transmission de l'énergie dissipée par un emballement thermique de l'accumulateur aux autres accumulateurs du pack, afin d'éviter qu'eux-mêmes ne rentrent dans une situation d'emballement thermique.

Il existe donc un besoin pour améliorer les solutions de refroidissement de pack-batterie, notamment afin d'absorber l'énergie dissipée par un emballement thermique d'un accumulateur donné au sein du pack et ainsi de limiter la température des autres accumulateurs du pack et par là d'éviter que ces autres accumulateurs ne partent également en emballement thermique.

En outre, l'amélioration doit aussi être optimisée en termes de poids et d'encombrement pour préserver les performances du pack.

Le but de l'invention est de répondre au moins en partie à ce(s) besoin(s).

### Exposé de l'invention

Pour ce faire, l'invention concerne, sous l'un de ses aspects, un module de batterie comprenant:
- un ou plusieurs accumulateurs comprenant chacun au moins une cellule électrochimique formée d'une cathode, d'une anode et d'un électrolyte intercalé entre la cathode et l'anode, un emballage agencé pour contenir avec étanchéité la cellule électrochimique;
- au moins un dispositif formant un nébuliseur comprenant :
   un réservoir contenant un liquide à nébuliser,
   au moins un élément piézo-électrique agencé en contact avec une surface du réservoir,
   au moins un capteur de température adapté pour mesurer la température en un point au sein du module,
   une unité électronique de commande reliée au capteur de température et à l'(les) élément(s) piézo-électrique(s), l'unité électronique étant adaptée pour respectivement détecter à partir de la mesurée effectuée, par le capteur le dépassement d'une température seuil et, lorsque la détection est effective, alimenter électriquement l'(les) élément(s) piézo-électrique(s) de sorte à ce que ce(s) dernier(s) fasse(nt) vibrer la surface du réservoir afin de nébuliser ainsi le liquide en microgouttelettes projetées dans le module.

Par « capteur de température », on entend ici et dans le cadre de l'invention, un capteur qui mesure directement la température, ou tout autre capteur qui mesure un paramètre physique ou chimique qui permet de déduire la température, comme un capteur de pression ou un capteur chimique (capteur de gaz).

Ainsi, un capteur de température selon l'invention permet directement ou indirectement de détecter le passage d'une température au sein du module au-delà d'un certain seuil.

Un capteur de température peut être une commande d'un BMS du module ou d'un pack-batterie intégrant le module, qui a identifié une élévation de température au sein du module. Par « nébuliseur », on entend ici et dans le cadre de l'invention indifféremment atomiseur, pulvérisateur, atomiseur, c'est-à-dire un dispositif qui permet de transformer un liquide en un nuage de gouttelettes extrêmement fines (brouillard ou brume).

L'unité électronique de commande est de préférence alimentée électriquement par au moins un des accumulateurs du module. Typiquement, l'unité électronique peut être alimentée par la tension à 12V des accumulateurs.

L'unité électronique de commande peut comprendre un convertisseur de tension pour convertir la tension continue d'un accumulateur en la tension d'alimentation du(des) élément(s) piézoélectrique(s).

Selon un mode de réalisation avantageux, l'unité électronique de commande comprenant deux circuits électroniques distincts reliés entre eux par un relais, un des deux circuits étant adapté pour fournir une alimentation électrique à l'autre des deux circuits, détecter à partir de la mesure effectuée par le capteur un dépassement de température au-delà de la température seuil, l'autre des deux circuits étant adapté pour alimenter électriquement l'(les) élément(s) piézoélectrique(s), le relais étant activé lorsque la détection est effective.

Le module peut comprendre une pluralité de nébuliseurs. Selon ce mode, le module peut alors comprendre un ou plusieur(s) capteur(s) de température propre à chaque nébuliseur ou communs à la pluralité de nébuliseurs.

Selon un autre mode de réalisation avantageux, l'emballage de chaque accumulateur est un boitier, notamment de format cylindrique.

Selon ce mode, et une variante avantageuse, le(s) nébuliseur(s) est(sont) chacun intégré(s) dans un boitier de forme et dimensions identiques à celles d'un boitier d'accumulateur, le boitier de nébuliseur étant percé d'au moins un trou débouchant pour laisser échapper les microgouttelettes à projeter au sein du module. Cette intégration peut permettre de localiser le nébuliseur en lieu et place d'un accumulateur au sein d'un module de batterie. Ainsi, non seulement on peut optimiser l'emplacement pour projeter les microgouttelettes mais aussi l'intégration du nébuliseur dans le design du module.

Selon cette variante, le boitier du nébuliseur peut être avantageusement connecté électriquement en parallèle avec les boitiers des accumulateurs du module. Avantageusement, le capteur de température est un thermocouple, ou un capteur de pression ou un capteur chimique.

Un capteur de pression peut avantageusement réaliser la détection d'une élévation de température, par une augmentation de la pression dans le compartiment du module.

Un capteur chimique peut avantageusement réaliser une détection chimique suite à une thermo-dégradation d'un matériau traceur dans le compartiment du module, qui génère l'émission de produits volatiles, tels que COV, CO₂. La demande de brevet au nom de la Demanderesse, déposée le 29 Octobre 2020, sous le numéro FR2011112, décrit une composition thermosensible qui joue le rôle d'un tel matériau traceur.

Le réservoir peut être un bac recouvert d'un film adapté pour se déchirer sous la pression des microgouttelettes.

L'(Les) élément(s) piézo-électrique(s) peut(vent) être à usage unique. Ainsi il(s) ne serve(nt) qu'à une unique nébulisation du liquide contenu dans le réservoir.

L'(Les) élément(s) piézo-électrique(s) peut(vent) être configuré(s) pour faire vibrer la surface du réservoir pendant 5 à 10 secondes. Après 5 à 10 secondes, l'(les) élément(s) piézo-électrique(s) peuvent se détériorer. En pratique, 5 secondes de vibration intense peuvent être suffisantes pour la nébulisation du liquide.

Ainsi, l'(les) élément(s) piézo-électrique(s) peut(vent) fonctionner de manière explosive, c'est-à-dire avec un mode de vibration très intense durant 5 à 10 secondes avant de faire défaut. De tels éléments piézo-électriques ont l'avantage d'être peu coûteux et de petites tailles.

Le liquide à nébuliser est de préférence de l'eau éventuellement glycolée et/ou désionisée ou un liquide à base de dodécafluorooxepane. De manière plus générale, il peut s'agir de tout liquide inhibiteur d'incendie.

Ainsi, l'invention consiste essentiellement à intégrer au sein d'un module de batterie un nébuliseur configuré pour atomiser un liquide, de préférence de l'eau, contenu dans un réservoir au-delà d'une température seuil caractéristique d'un emballement thermique, les microgouttelettes ainsi créées étant projetées au sein du module pour venir absorber l'énergie crée par l'emballement thermique.

Autrement dit, lors d'un emballement thermique, un accumulateur au sein du module va émettre une forte quantité d'énergie, caractérisée par une montée en température du module. Au moment où la température de seuil est atteinte, le nébuliseur va atomiser le liquide du réservoir en une brume.

Les microgouttelettes de cette brume vont être projetées au sein du module et vont absorber l'énergie lors de leur changement de phase, c'est-à-dire lors du passage de leur état liquide à l' état gazeux. L'énergie ainsi absorbée va permettre de limiter la transmission d'énergie aux autres accumulateurs du module.

Le liquide utilisé est de préférence de l'eau car elle présente l'un des meilleurs taux d'absorption d'énergie par changement d'état de matière.

Les inventeurs ont surmonté un préjugé technique selon lequel l'eau ne peut être mise en œuvre avec l'électricité pour éviter tout risque d'électrisation et d'électrocution.

Or, les inventeurs ont fait le constat que dans le cas des batteries, le risque de feu est bien plus dangereux pour les utilisateurs que l'électrisation par le biais de l'eau qui plus est sous la forme d'une brume vaporisée.

Ainsi, ils ont judicieusement pensé à un nébuliseur en tant que moyen efficace pour maitriser ou éviter le risque de propagation du feu lors de l'emballement thermique d'un accumulateur, qui peut se produire par exemple à la suite d'un choc mécanique, d'une surtension ou sur-température.

On précise ici que pour le phénomène d'emballement thermique, on se reportera à la publication [1] et au protocole décrit dans cette publication. Les températures dites « d'auto-échauffement » et « d'emballement thermique » sont respectivement notées T1 et T2 dans cette publication.

La température T1, typiquement 70°C, dans la figure 2 de la publication, est la température à partir de laquelle l'accumulateur s'échauffe sans source externe à une vitesse typique de 0,02 °C/min en conditions adiabatiques.

La température T2, typiquement 150°C, dans la figure 2 de la publication, est la température à partir de laquelle l'accumulateur s'échauffe à une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min.

Au final, l'invention apporte de nombreux avantages parmi lesquels on peut citer:
- une solution de sécurité simple à mettre en œuvre et efficace pour empêcher la propagation d'un emballement thermique au sein d'un module de batterie ;
- une solution qui n'est pas au détriment du poids d'un module ou d'un pack-batterie, un dispositif nébuliseur selon l'invention pouvant être très léger, ce qui est très avantageux pour les applications embarquées ;
- la possibilité de mise en place très rapidement et aisément dans un module de batterie, dès sa conception ou au contraire en rétrofit d'un module ou pack-batterie existant.

Pour une application à un pack-batterie Li-ion, chaque accumulateur est un accumulateur Li-ion dans lequel :
- le matériau d'électrode(s) négative(s) est choisi dans le groupe comportant le graphite, le lithium, l'oxyde de titanate Li₄TiO₅O₁₂ ;
- le matériau d'électrode(s) positive(s) est choisi dans le groupe comportant LiFePO₄, LiCoO₂, LiNi_{0.33}Mn_{0.33}Co_{0.33}O₂.

L'invention concerne également tout véhicule comprenant au moins un module de batterie tel que décrit précédemment.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion avec son emballage souple selon l'état de l'art.
[Fig 3] la figure 3 est une vue en perspective d'un accumulateur lithium-ion selon l'état de l'art avec son emballage rigide constitué d'un boitier de forme cylindrique.
[Fig 4] la figure 4 est une vue en en perspective d'un accumulateur lithium-ion selon l'état de l'art avec son emballage rigide constitué d'un boitier de forme prismatique.
[Fig 5] la figure 5 est une vue en perspective d'un assemblage au moyen de busbars d'accumulateurs lithium-ion selon l'état de l'art, formant un pack-batterie.
[Fig 6] la figure 6 est une vue de côté d'un module de batterie selon l'invention équipé avec un busbar et avec un dispositif nébuliseur.
[Fig 7] la figure 7 est une vue de côté d'un exemple avantageux d'intégration d'un dispositif nébuliseur selon l'invention, dans un boitier de format et dimensions identiques à celui d'un boitier d'accumulateur.
[Fig 8] la figure 8 est un schéma électronique d'un circuit constituant une partie de l'unité électronique de commande d'un dispositif nébuliseur selon l'invention
[Fig 9] la figure 9 illustre sous forme de courbes les relevés de température en fonction du temps respectivement d'un accumulateur refroidi par une nébulisation selon l'invention et d'un accumulateur selon l'état de l'art sans dispositif de refroidissement.

### Description détaillée

Les figures 1 à 5 sont relatives à des exemples différents d'accumulateur Li-ion, d'emballages souples et boitiers d'accumulateurs ainsi qu'un pack-batterie selon l'état de l'art. Ces figures 1 à 5 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 9.

Dans l'ensemble de la présente demande, les termes « inférieur », « supérieur », « bas », « haut », « dessous » et « dessus » sont à comprendre par référence par rapport à des boitiers d'accumulateurs Li-ion agencés à la verticale.

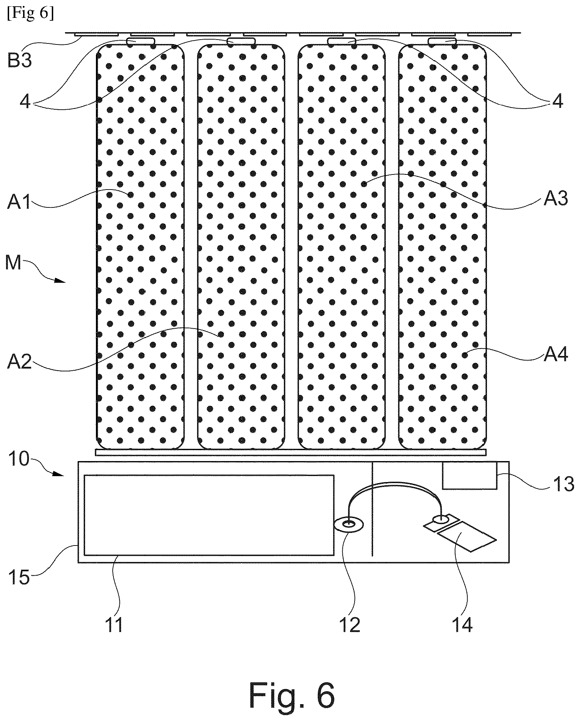

On a représenté en figure 6, un module M de batterie d'accumulateurs Li-ion, A1, A2, A3, A4 équipé d'un exemple de dispositif nébuliseur 10 selon l'invention.

Dans les exemples illustrés, les accumulateurs A1-A4 illustrés peuvent être à boitiers de format cylindrique, typiquement de format 18650 ou 21700.

Les accumulateurs A1-A4 sont reliés électriquement par leur borne de sortie 4 par groupe au moyen d'un busbar B3.

Le nébuliseur 10 comprend tout d'abord un réservoir 11 contenant un liquide à nébuliser, de préférence de l'eau éventuellement glycolée et/ou désionisée.

Il comprend également un élément piézo-électrique 12 agencé en contact avec une surface du réservoir 11 ainsi qu'un capteur de température 13, de préférence un thermocouple, adapté pour mesurer la température en un point au sein du module M.

Le nébuliseur 10 comprend enfin une unité électronique de commande 14 reliée au capteur de température 13 et à l'élément piézo-électrique 12. L'unité de commande 14 est alimentée électriquement directement par la tension d'au moins un accumulateur, typiquement à 12V. Un boitier 15 peut loger l'ensemble des composants 11, 12, 13, 14 précités.

Le fonctionnement du dispositif nébuliseur 10 est le suivant.

Lors du fonctionnement des accumulateurs, l'unité électronique 14 compare en temps réel et en permanence la température mesurée par le capteur 13 à une température seuil caractéristique d'un emballement thermique.

Le capteur 13 peut ne pas être un capteur de température en tant que tel, mais un capteur qui permet de détecter le passage du seuil thermique visé, tel qu'un capteur de pression ou un capteur chimique.

Lorsque la température mesurée est au-dessus de la température seuil, alors l'unité électronique 14 alimente électriquement l'élément piézo-électrique 12.

L'élément piézo-électrique activé fait vibrer la surface du réservoir avec laquelle il est en contact. Le liquide contenu dans le réservoir est alors nébulisé et les microgouttelettes qui en résultent sont projetées dans le module. La projection peut être réalisée sous l'effet de la pression régnant au sein du réservoir par les microgouttelettes qui vont percer un film de scellement du réservoir, par exemple en plastique.

Les microgouttelettes vont absorber l'énergie de l'emballement thermique lors de leur changement de phase, de l'état liquide à l' état gazeux. L'énergie ainsi absorbée va permettre de limiter la transmission d'énergie aux autres accumulateurs du module.

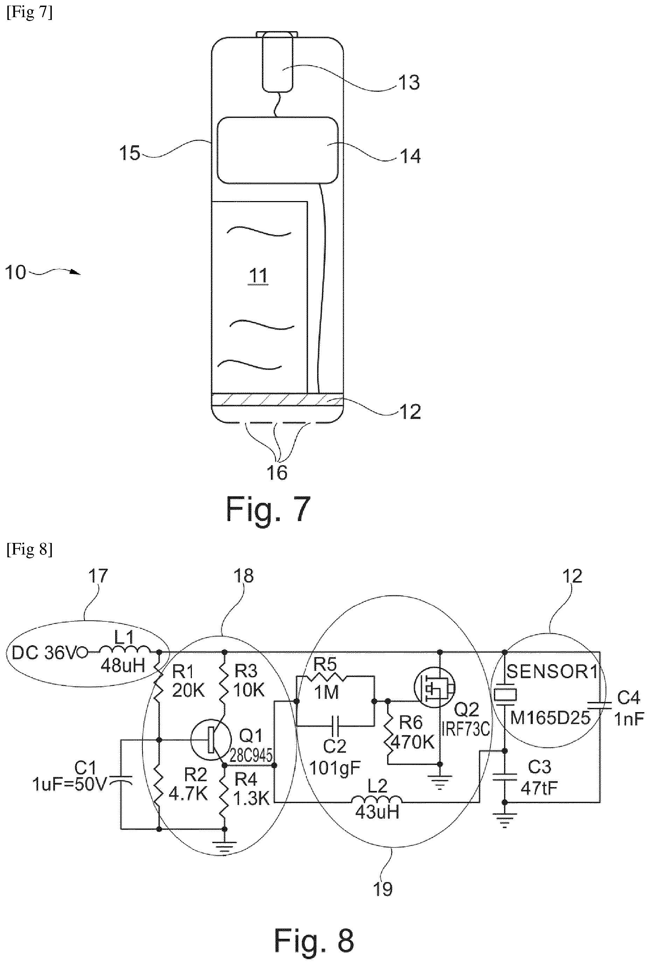

La figure 7 montre une intégration optimisée du dispositif nébuliseur 10 : le boitier 15 a exactement la forme cylindrique et les dimensions d'un boitier 6 d'accumulateur A1, A2, A3, A4. Ainsi, on peut localiser de manière optimale le nébuliseur 10 au sein du module, notamment dans une zone critique vis-à-vis d'un emballement thermique. Il est alors préférentiellement connecté en parallèle à d'autres accumulateurs. Dans ce cas, une conversion de tension au sein du nébuliseur 10 peut être nécessaire pour d'adapter la tension des accumulateurs en parallèle à ses besoins de fonctionnement.

Le boitier cylindrique 15 illustré est percé d'une pluralité de trous débouchant 16 pour laisser passer les microgouttelettes du liquide dans l'environnement du module.

L'unité électronique de commande 14 peut être constituée par deux circuits électroniques distincts reliés entre eux par un relais, un des deux circuits étant adapté pour fournir une alimentation électrique à l'autre des deux circuits, lire la température mesurée par le capteur 13 et à la comparer avec la température seuil, l'autre des deux circuits étant adapté pour alimenter électriquement l'élément piézoélectrique 12, le relais étant activé lorsque la température comparée est au-dessus de la température seuil.

On a illustré en figure 8 un exemple de circuit électronique dédié à l'alimentation de l'élément piézo-électrique 12. L'ensemble des composants électroniques n'est pas ici détaillé de manière exhaustive, seule les sous-fonctions l'étant.

Le circuit électronique comprend respectivement de l'entrée vers la sortie, une entrée 17 avec une inductance de lissage du courant, un sous-circuit 18 d'adaptation de la tension pour l'alimentation de l'élément piézoélectrique, un sous-circuit 19 de résonance.

Les inventeurs ont procédé à des essais pour valider le fonctionnement du dispositif nébuliseur 10 selon l'invention.

Ces essais consistent à faire chauffer un accumulateur très rapidement, puis à injecter dans l'atmosphère environnante une brume d'eau.

Plus précisément, ils ont chauffé un accumulateur de format 18650 à une température de 60°C, de manière constante avec un courant de valeur égale à 6A.

Puis, ils ont injecté dans l'atmosphère de l'accumulateur, une brume d'eau.

Ils ont alors constaté une baisse de température de l'accumulateur de 8 °C avec une stabilisation à 52°C.

Ainsi, afin de rétablir la température initiale de 60°C, la puissance de chauffe a été augmentée en passant le courant d'alimentation de 6A à 7,5A.

Suite à l'échauffement d'un accumulateur jusqu'à 160°C, sa vitesse de refroidissement à l'air libre, c'est-à-dire selon l'état de l'art sans dispositif de refroidissement, ou dans un brouillard de nébulisation, c'est-à-dire selon l'invention, a été mesurée.

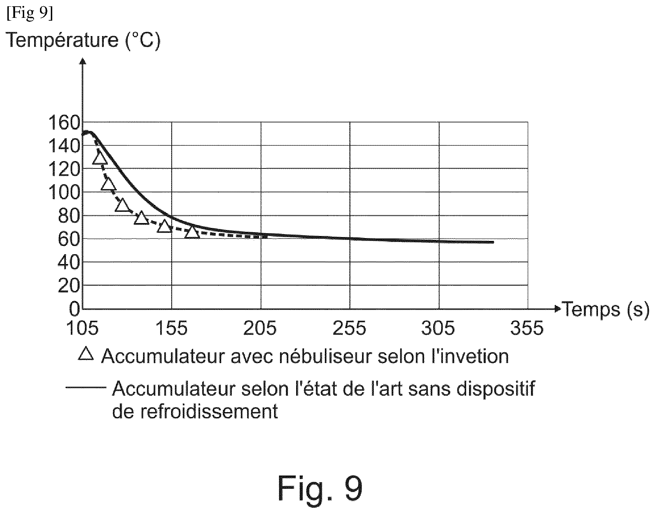

La figure 9 présente les courbes d'évolution de température au cours d'un essai d'emballement thermique mis en œuvre respectivement avec un accumulateur muni d'un dispositif nébuliseur selon l'invention et un accumulateur selon l'état de l'art dépourvu de tout dispositif de refroidissement.

Il ressort clairement de cette figure 9 qu'avec la nébulisation selon l'invention, la température d'accumulateur jusqu'à 100°C chute beaucoup plus rapidement. La pente de refroidissement est ainsi trois fois plus élevée pour un accumulateur sur lequel une nébulisation est appliquée comparativement à un accumulateur selon l'état de l'art dépourvu de tout dispositif de refroidissement.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

### Liste des références citées :

[1] Xuning Fenga, et al. « Key Characteristics for Thermal Runaway of Li-ion Batteries » Energy Procedia, 158 (2019) 4684-4689.

## Revendications

1. Module (M) de batterie comprenant:
- un ou plusieurs accumulateurs (A1, A2, A3, A4) comprenant chacun au moins une cellule électrochimique C formée d'une cathode (2), d'une anode (3) et d'un électrolyte intercalé entre la cathode et l'anode, un emballage (6) agencé pour contenir avec étanchéité la cellule électrochimique;
- au moins un dispositif (10) formant un nébuliseur comprenant :
un réservoir (11) contenant un liquide à nébuliser,
au moins un élément piézo-électrique (12) agencé en contact avec une surface du réservoir,
au moins un capteur de température (13) adapté pour mesurer la température en un point au sein du module,
une unité électronique de commande (14) reliée au capteur de température et à l'(les) élément(s) piézo-électrique(s), l'unité électronique étant adaptée pour respectivement détecter à partir de la mesure effectuée par le capteur le dépassement d'une température seuil et, lorsque la détection est effective, alimenter électriquement l'(les) élément(s) piézo-électrique(s) de sorte à ce que ce(s) dernier(s) fasse(nt) vibrer la surface du réservoir afin de nébuliser ainsi le liquide en microgouttelettes projetées dans le module.

2. Module (M) de batterie selon la revendication 1, l'unité électronique de commande étant alimentée électriquement par au moins un des accumulateurs du module.

3. Module (M) de batterie selon la revendication 2, l'unité électronique de commande comprenant un convertisseur de tension pour convertir la tension continue d'un accumulateur en la tension d'alimentation du(des) élément(s) piézoélectrique(s).

4. Module (M) de batterie selon l'une des revendications précédentes, l'unité électronique de commande comprenant deux circuits électroniques distincts reliés entre eux par un relais, un des deux circuits étant adapté pour fournir une alimentation électrique à l'autre des deux circuits, détecter à partir de la température mesurée par le capteur un dépassement de température au-delà de température seuil, l'autre des deux circuits étant adapté pour alimenter électriquement l'(les) élément(s) piézoélectrique(s), le relais étant activé lorsque la détection est effective.

5. Module (M) de batterie selon l'une des revendications précédentes, comprenant une pluralité de nébuliseurs.

6. Module (M) de batterie selon la revendication 5, comprenant un ou plusieur(s) capteur(s) de température propre à chaque nébuliseur ou communs à la pluralité de nébuliseurs.

7. Module (M) de batterie selon l'une des revendications précédentes l'emballage de chaque accumulateur étant un boitier, notamment de format cylindrique.

8. Module (M) de batterie selon la revendication 7, le(s) nébuliseur(s) étant chacun intégré(s) dans un boitier (15) de forme et dimensions identiques à celles d'un boitier d'accumulateur, le boitier de nébuliseur étant percé d'au moins un trou débouchant pour laisser échapper les microgouttelettes à projeter au sein du module.

9. Module (M) de batterie selon la revendication 8, le boitier du nébuliseur étant connecté électriquement en parallèle avec les boitiers des accumulateurs du module.

10. Module (M) de batterie selon l'une des revendications précédentes, le capteur de température étant un thermocouple ou un capteur de pression ou un capteur chimique.

11. Module (M) de batterie selon l'une des revendications précédentes, le réservoir étant un bac recouvert d'un film adapté pour se déchirer sous la pression des microgouttelettes.

12. Module (M) de batterie selon l'une des revendications précédentes, l'(les) élément(s) piézo-électrique(s) étant à usage unique.

13. Module (M) de batterie selon l'une des revendications précédentes, l'(les) élément(s) piézo-électrique(s) étant configuré(s) pour faire vibrer la surface du réservoir pendant 5 à 10 secondes.

14. Module (M) de batterie selon l'une des revendications précédentes, le liquide à nébuliser étant de l'eau éventuellement glycolée et/ou désionisée ou un liquide à base de dodécafluorooxepane.

15. Module (M) de batterie selon l'une des revendications précédentes, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O₁₂ ;
- le matériau d'électrode(s) positive(s) est choisi dans le groupe comportant LiFePO₄, LiCoO₂, LiNi_{0.33}Mn_{0.33}Co_{0.33}O₂.

16. Véhicule comprenant au moins un module de batterie selon l'une des revendications précédentes.
